Europäisches Patentamt

European Patent Office

Office européen des brevets

(19)

(11) Publication number: 0 162 645

A1

(12) **EUROPEAN PATENT APPLICATION**

(21) Application number: 85303339.7

(22) Date of filing: 10.05.85

(51) Int. Cl.⁴: **C 04 B 41/50**
B 05 D 1/14, B 32 B 5/24
A 01 G 13/02, A 43 B 1/00
A 47 C 27/00, B 01 D 53/02
C 02 F 1/28, E 04 B 1/76
E 04 C 2/26, F 25 D 23/00

(30) Priority: 11.05.84 JP 93044/84
06.12.84 JP 185254/84
26.12.84 JP 197117/84
26.12.84 JP 197118/84

(43) Date of publication of application:
27.11.85 Bulletin 85/48

(84) Designated Contracting States:
AT BE CH DE FR GB IT LI LU NL SE

(71) Applicant: Harada, Masami
Shamboru Gojo No. 4, Minami Kotobuki-cho Ukyo-ku
Kyoto(JP)

(72) Inventor: Harada, Masami
Shamboru Gojo No. 4, Minami Kotobuki-cho Ukyo-ku
Kyoto(JP)

(74) Representative: Bubb, Antony John Allen et al,
GEE & CO. Chancery House Chancery Lane
London WC2A 1QU(GB)

(54) Carbon-fiber-covered material.

(57) Finely divided carbon fibres (3) are combined with conventionally known base materials (1) such as plastic sheets or wood plates by electrostatically applying them onto an adhesive surface (2) on the base material thereby to form a mass of densely standing fine carbon fibers on the base material. Various materials such as plastics, metals, glass, ceramics, wood, paper, cloths, leather, stone and brick can be utilized as base material, and these materials can thereby easily and economically be given many desirable physical properties of carbon fibers such as heat resistivity, heat insulating property, fire retardancy, adsorption property and absorbing or shielding ability for electromagnetic waves. Thus obtained ""carbon-fiber-covered material" can find a wide variety of uses as heat insulator, cold reserving material, hot retaining material, fire retardant material, malodor adsorbent, wave absorber, etc.

*Fig. I(A)*

-1-

## CARBON-FIBER-COVERED MATERIAL

This invention relates to a new material combined with and covered by carbon fibers, and more particularly to a new material combined with and covered by finely divided or pulverized carbon fibers which are adhered to and densely standing on a surface or surfaces of a base material conventionally known in itself such as, for example, plastics, metals, wood, and the like.

According to the present invention, many desirable properties owned by carbon fibers and activated carbon fibers such as heat resisting property, heat insulating property, fire retardancy, corrosion resistivity, wave absorbing (shielding) property and adsorption property are imparted through simple and economical processing steps to the base material (which will be referred to as "substrate" hereinafter) to produce new materials of the invention, i.e. "carbon-fiber-covered materials" which will find a wide variety of uses including building and interior materials, structural materials, insulators, filter elements, adsorbents, etc.

Recently, carbon fibers have been given remarkable attention by virtue of their mechanical strength and light weight and increasingly utilized in many fields as so-called "Carbon Fiber Reinforced Composite Material" (CFRCM) by compounding carbon fibers with base plastic resins or metal matrices.

Carbon fibers are usually supplied in the form of filaments and tows as well as woven or knitted fabrics, non-woven fabrics (or felts) and pre-pregs. In any case, carbon fibers have mainly been intended to be used as "intermediate material" for producing CFRCM, namely advanced and expensive composite materials. Thus, carbon fibers are deemed highly expensive industrial materials and find only limited areas of use which will produce large profits, for example, aircraft industries and luxurious sports goods.

Besides mechanical strength and light weight, carbon fibers have many desirable physical properties such as heat resisting property, fire retardancy, heat insulating property, corrosion resistance, property for shielding electromagnetic waves, and property for adsorbing malodorous and harmful substances. These desirable and useful properties or functions, however, have not been utilized in a relatively simple and economical manner. For example, woven or knitted fabrics of carbon fibers have been developed having a high degree of heat insulating property and fire retardancy, but they are not employed as such for interior materials, e.g. wall cloth having insulating property and fire retardancy because they are lack of shape retentivity without any support material or structure and difficult to handle for

-3-

applying them to the wall structure. Likewise, carbon fibers have not been utilized as, for example, heat insulator to cut off heat radiated backward from electric heaters, or cold reserving material in refrigerators to prevent cold air from dissipating outwardly from the refrigerator. While carbon fibers, especially activated carbon fibers, are known to have good adsorption property, carbon fiber fabrics, as such, have not been used for adsorbent materials, much less for combination with cement, stone, brick, glass, wood, paper or cloth for the purpose of providing effective and economical heat insulator, heat or fire resisting materials, adsorbent, etc.

Accordingly, it is an object of the invention to develop new uses of carbon fiber itself.

It is another object of the invention to utilize carbon fiber in its simpler and cheaper form than heretofore known, without formulating it in complex and expensive composite forms.

It is further object of the invention to provide a new material based on carbon fibers and to be used in a wide variety of applications, for example, industrial, agricultural, architectural and household uses.

-4-

It is still further object of the invention to provide a new material comprising a base material (substrate) selected from a wide variety of conventional materials and finely divided or pulverized carbon fibers adhered to and standing close together on the surface of the base material.

It is yet another object of the invention to provide a new combination of carbon fibers with conventional substrates, such as plastics, metals, woods, glass, ceramics, paper, cloth, leather, brick, stone, cement, etc. in a relatively simple and economical manner to obtain a new material having good physical properties such as heat resistivity, heat insulating property, corrosion resistivity and adsorption property, on one hand, and good shape retentivity and easy handling, on the other hand.

It is a specific object of the invention to provide a shielding tape which is made from fine carbon fibers adhered to and standing on the base film and which is easy to attach to any desired electronical or electrical equipments for shielding undesirable electromagnetic waves.

It is another specific object of the invention to provide a new material which is covered by fine activated carbon fibers adhered to and standing on the base material and is suitable to be used as filter elements and adsorbents.

-5-

Briefly, the new material of the invention comprises fine and minute carbon fibers of the length of from a few microns to a few millimeters adhered to and densely standing on the surface of appropriate substrate or base material selected from the group consisting of plastics, metals, glass, ceramics, wood, paper, cloth, leather, brick and stone. "Densely standing" means that carbon fibers standing upright on the substrate are in such density that the surface of the substrate is virtually covered and hidden by standing fibers and the surface is not macroscopically exposed. Densely standing carbon fibers may cover all the surface of the substrate or carbon fibers may be densely adhered to localized area or areas on the substrate.

Carbon fibers can be applied, preferably in standing conditions, on the substrate by either a mechanical spraying method or an electrostatic flocking method, the latter being more preferable in view of easiness in operation and high quality of product obtained thereby.

Substrates or base materials which can be employed in this invention include films, sheets, plates and bars of plastics such as nylon, vinyl, polypropylene, polyethylene, foamed and non-foamed polyurethane; woven fabrics, knitted fabrics, non-woven fabrics of natural fibers including cotton, hemp, silk, and synthetic fibers including rayon, polyester; fabrics of inorganic fibers such as glass wool and metallic fibers; papers including Japanese paper and corrugated cardboard; sheets and

-6-

blocks of natural and synthetic rubbers; foils, sheets, plates, rod and bars of metals; synthetic and natural leathers; wood plates including veneer and plywood, wood blocks and wood bars; plate glasses, glass rods, glass tubes, glass cups and other glasswares; bricks; concrete blocks; and stones. By combining these substrates with carbon fibers, the substrates are imparted with desirable physical properties such as heat resistivity, heat insulating property, fire retardancy, corrosion resistivity, wave absorbing property, and malodor adsorbing property, and at the same time impart to the carbon fibers shape retentivity which is required in easily handling the same. The substrates which are employed in this invention are easily and economically available from conventional sources, and the carbon fibers are also relatively economical because they do not require special expensive treatments such as those required in making so-called composite materials so that the new materials of the invention as a whole are obtained in a relatively non-expensive manner to permit them to be utilized in a wide variety of usages.

In the present invention, carbon fibers are utilized in the form of fine and minute fibers obtained by finely dividing or pulverizing continuous carbon fiber filaments or tows comprising a plurality of such filaments, although such fine and minute carbon fibers are also obtained by finely divided or pulverizing commercially available woven and non-woven fabrics or knitted fabrics of carbon fibers.

-7-

The essential feature of the present invention lies in that conventional materials such as plastic sheets or films, metallic plates, plate glasses, wood plates, leathers, rubber sheets can be easily and economically combined with carbon fibers to thereby produce new materials heretofore unexpected and develop a wide variety of new uses of carbon fibers.

To manufacture the new materials of the present invention, adhesives are applied on the surface of a selected substrate. Adhesives which may be employed in the present invention include organic adhesives such as acrylic esters, polyvinyl acetate, ethylene-vinyl acetate copolymer, rubbery nitrile, styrene butadiene rubber, polyurethane, epoxy resin and so on; and inorganic adhesives such as alkali metal silicates, alkyl silicates, and so on. Where the new materials of the present invention are intended to be used in extremely high temperatures exceeding 1000°C, inorganic adhesives capable of endure such temperatures should be employed.

Adhesives may preferably contain conductive dusts such as carbon dust or metal dust where carbon fibers are combined with the substrate by utilizing electrostatic flocking method. Adhesives may be applied in such a thickness as from .001 to 5mm, depending upon specific length of carbon fibers used.

Carbon fibers which can be utilized in the present invention include those obtained from PAN (polyacrylonitrile), pitch, cellulosic rayon as well phenolic precursors. High performance carbon fibers (HPCF) as well as general purpose carbon fibers (GPCF) may be used. Furthermore, the present invention contemplates to use activated carbon fibers, which generally are obtained through stabilizing steps and activating steps conducted on organic starting materials selected from PAN fibers, rayon fibers or phenolic-fibers. Stabilizing steps comprise heating the starting material at temperatures between 200 and 400°C to render the material fire resistant. Activating steps are usually conducted in oxidizing atmospheres at relatively high temperatures between 500 and 1000°C to thereby produce carbon fibers having myriad micropores of from 7 to 15 microns diameter developed in the peripheral surface of the fibers. These microphores render carbon fibers very active to adsorb malodorous and harmful substances.

The invention is illustrated by way of example in the accompanying drawings, in which:

Figure 1 illustrates enlarged fragmentary sectional views of several embodiments of carbon-fiber-covered materials according to the invention, Figure 1(A) showing an embodiment in which the substrate is covered on its one surface with carbon fibers, Figure 1(B) showing another embodiment in which the substrate is covered on its both surfaces with carbon fibers, Figure 1(C) showing further embodiment in which the substrate is covered with carbon fibers and other fibers alternately arranged to form patterns, and Figure 1(D) showing still further embodiment in

-9-

which carbon fibers are arranged in crossing stripes on the substrate;

Figure 2 illustrates an example of a method for manufacturing the carbon-fiber-covered material of the invention;

Figure 3 illustrates another example of a method for manufacturing the carbon-fiber-covered material of the invention;

Figures 4 through 16 illustrate various uses of the carbon-fiber-covered materials of the invention, wherein

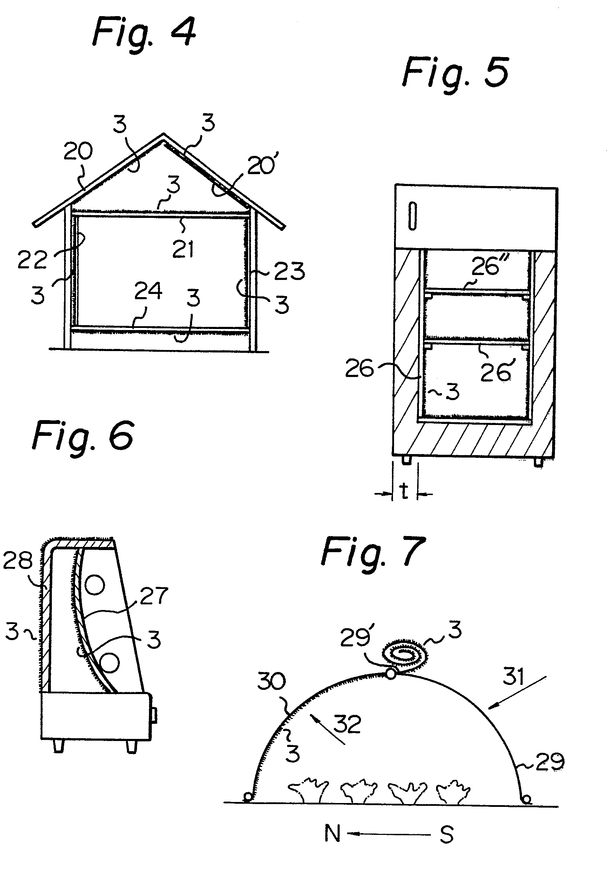

Figure 4 shows a use of the material of the invention as building or interior materials;

Figure 5 shows a use of the carbon-fiber-covered material of the invention as heat insulator or malodor adsorbent in a refrigerator;

Figure 6 shows a use of the material of the invention as thermal insulator in an electrical heater;

Figure 7 shows a use of the material of the invention as heat insulator in agricultural applications;

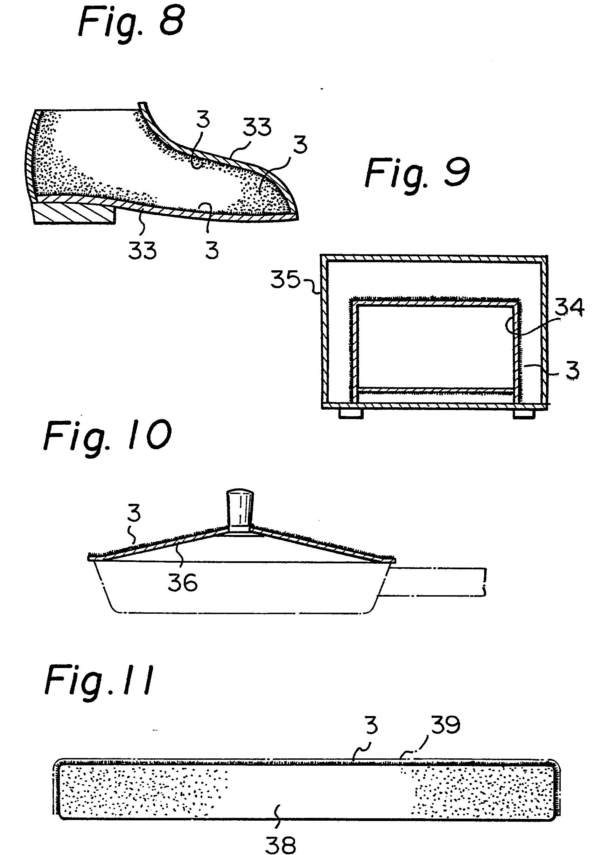

Figure 8 shows a use of the material of the invention as malodor adsorbent in the shoes;

Figure 9 shows a use of the material of the invention as thermal insulator in an electronic oven;

Figure 10 shows a use of the material of the invention as heat insulator of a pan lid;

Figure 11 shows a use of the material of the invention as fire retardant for a bed pad;

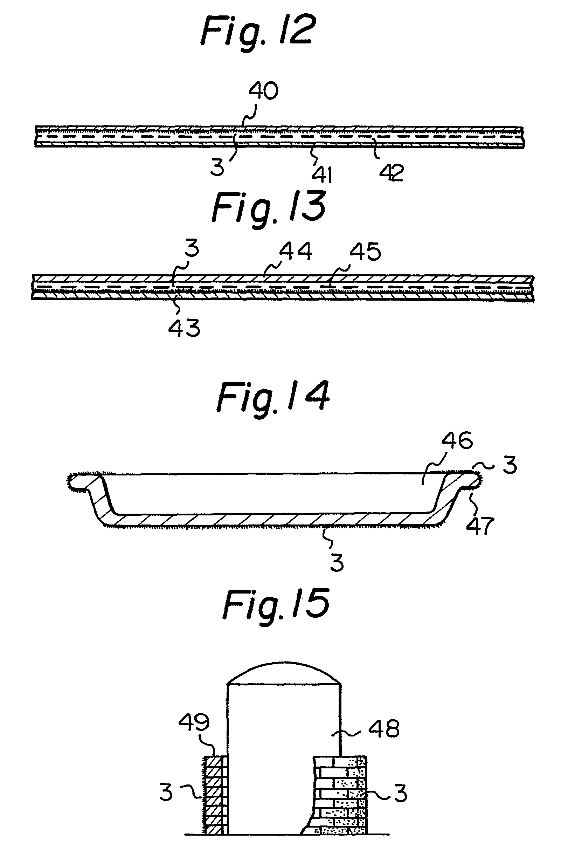

Figure 12 shows a use of the material of the invention as heat protector for an electric blanket;

Figure 13 shows a use of the material of the invention as heat retaining material for an electrically heating carpet;

Figure 14 shows a use of the material of the invention as heat insulator for a cooking utensil;

Figure 15 shows a use of the invention as heat insulator for refractories;

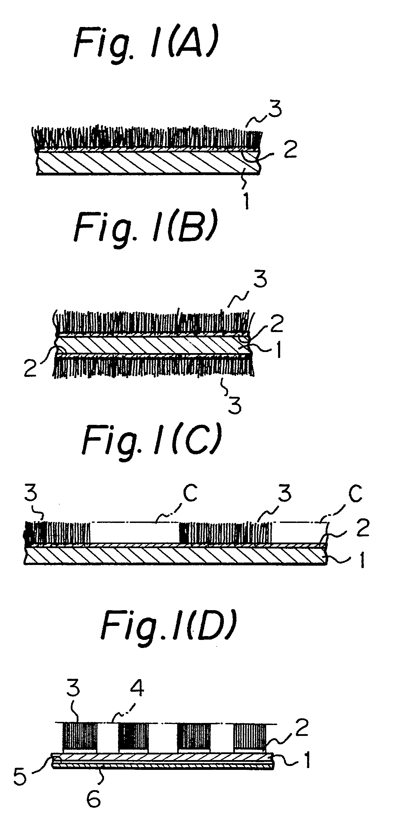

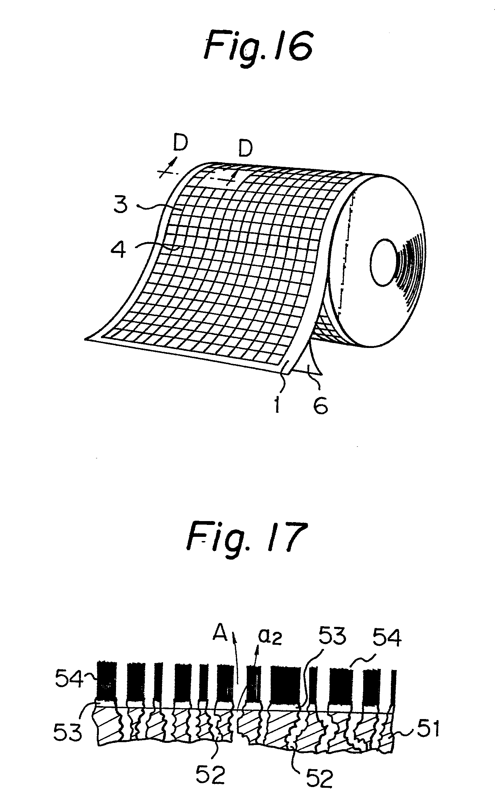

Figure 16 illustrates a wave absorbing tape manufactured according to the invention utilizing carbon-fiber-covered material as shown in Figure 1(D);

Figure 17 shows an enlarged fragmentary sectional view of a filtering or adsorbing material manufactured by planting activated carbon fibers on a surface of a permeable substrate such as foamed polyurethane;

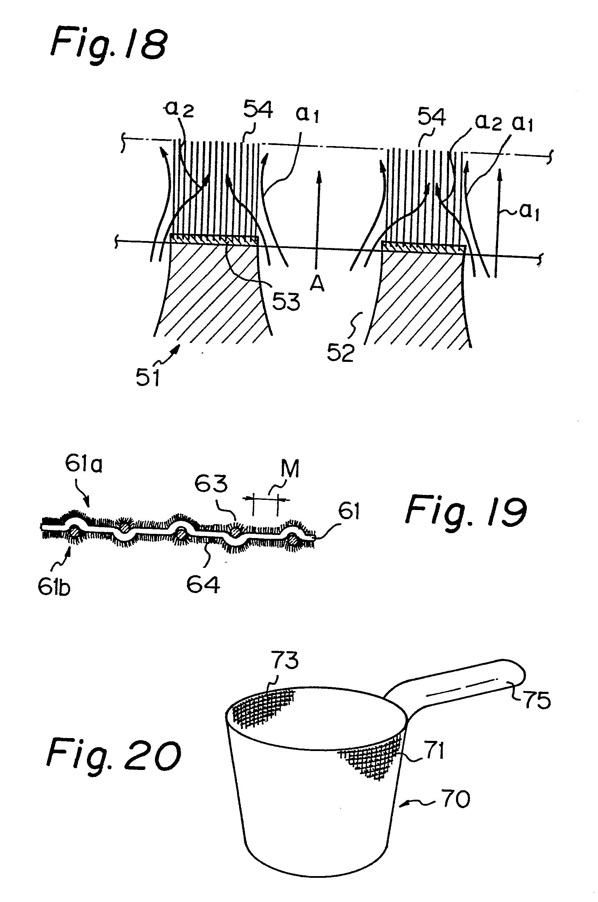

Figure 18 shows a further enlarged view of a filtering or adsorbing material in Figure 17;

Figure 19 shows an enlarged fragmentary section of a filtering material manufactured by planting activated carbon fibers on a wire net; and

Figure 20 illustrates a handy filter device made of a carbon-fiber-covered net as shown in Figure 19.

Referring now to the drawings, preferred embodiments of the invention will be described in detail.

In Figure 1(A), reference numeral 1 designates a substrate such as, for example, a nylon sheet of about .5mm thickness. The substrate 1 may be of other materials such as polyvinyl chloride sheet, cotton cloth, fiber glass fabric, Japanese paper, as well as plywood, sheet metal, leather, firebrick, foamed polyurethane or the like.

The substrate 1 is provided with an adhesive layer 2, for instance, epoxy resin applied in about .1mm thickness. Adhesives

-12-

2 may be of organic and inorganic types, the latter being preferable where the carbon-fiber-covered materials of the invention are to be used in elevated temperatures exceeding about 300°C and the substrates having high heat resistance are employed. Alkyl silicates are appropriate adhesives in high temperature applications.

Fine and minute carbon fibers 3 are densely planted on the adhesive layer 2. Carbon fibers 3 may be of about 8 m (.008mm) in diameter and .8mm in length. Generally, fine and minute carbon fibers may be prepared by finely dividing or pulverizing continuous carbon fiber filaments of about 7 - 15 microns in diameter into about .5 - 1.5 millimeter lengths. Carbon fibers 3 are standing close together so as to cover and conceal the surface of the substrate 1 to form carbon-fiber-covered materials of the invention. Substantially all of the carbon fibers 3 are standing upright on the substrate 1, though a few of fibers are slanting among upright fibers. In any case, carbon fibers 3 are sticking their lower end into the adhesive layer 2 and exposing their remaining surface to environmental atmosphere.

Carbon fibers may be mixed with other fibers such as cotton and hemp fibers where a pale surface color or grey color instead of pure black color is desired, although pure carbon fibers are preferable in view of properties such as thermal insulating property and odor adsorbing property to be attained.

-13-

Carbon fibers may be planted on both surfaces 2, 2 of the substrate 1 as shown in Figure 1(B) to attain as high insulating properties, flame retardancy, and the like as possible.

Figure 1(C) shows a varied form of the carbon-fiber-covered materials of the invention. In this instance, carbon fibers 3 are planted in limited areas on the surface of the substrate 1, and the remaining areas are occupied by, for example, white color flocks C to form black and white cross stripes. Various patterns such as stripes, checks, polka dots, and the like may be formed by mixing black carbon fibers and other colored fibers.

In the combined new material of the invention, substrate 1 serves as support for carbon fibers 3 which have no shape retentivity in themselves, and, in turn, is given by carbon fibers 3 many desirable properties which are not found in itself, such as heat resisting and insulating properties, fire retardancy or the like.

As an example, a test was carried on a carbon-fiber-covered PVC film. Carbon fibers of about .8mm length were planted in densely standing conditions on the substrate polyvinyl chloride film of about .5mm thickness. When flames at about 600°C were contacted to the rear surface of the substrate (which was not covered by carbon fibers), the substrate immediately burned and changed into black shrunk mass, whereas the upper surface covered by standing carbon fibers did not burn nor change by subjecting

14

it to flames of the same temperature, and in 15 seconds only rear surface of the substrate PVC was found to have small bubbles formed by thermal expansion.

Another test was conducted on another carbon-fiber-covered paper which was prepared by planting .8mm length carbon fibers in densely standing conditions on a Japanese paper of .3mm thick. The substrate paper was directly contacted on its rear surface to a lighted cigarette (at about 450°C) and found immediately to have a black burnt hole, whereas the upper surface covered by standing carbon fibers was found to endure direct contacting by lighted cigarette without burning, and in 20 seconds a pale burnt spot was found on the rear surface of the substrate.

Yet another test was conducted on a fiber glass woven fabric of about .5mm thickness covered on its upper surface with .8mm length carbon fibers standing upright densely thereon. Carbon-fiber-covered surface of the substrate was found to endure direct contacting by a lighted cigarette until a pale burnt spot was found to be formed on the rearface of the substrate in about 50 seconds, whereas contacting lighted portion of cigarette directly to the rearface of the substrate formed black burnt hole only in 10 seconds.

Figure 1(D) shows another embodiment of the carbon-fiber-covered material of the invention in which carbon fibers are planted on the substrate 1 in crossing rows 3 and 4 by the aid of adhesive layers 2 applied correspondingly in crossing patterns. These crossing rows 3 and 4 of carbon fibers can be clearly seen in Figure 16 which shows a specific use of the new material of the invention for absorbing or shielding undesirable electromagnetic waves. As will be seen, Figure 1(D) is an enlarged sectional view taken along the line D-D in Figure 16. By planting carbon fibers in cross stripes or crossing rows 3 and 4 as shown in Figure 1(D) or Figure 16, an amount of carbon fibers to be used can be economically reduced in certain applications.

In Figure 1(D), an adhesive layer 5 is provided on the rearface of the substrate 1 to be used for easily applying the carbon-fiber-covered material (shielding tape) to any selected equipments such as OA equipment. Adhesive layer 5 is covered with a remover paper 6 as explained in detail hereinafter.

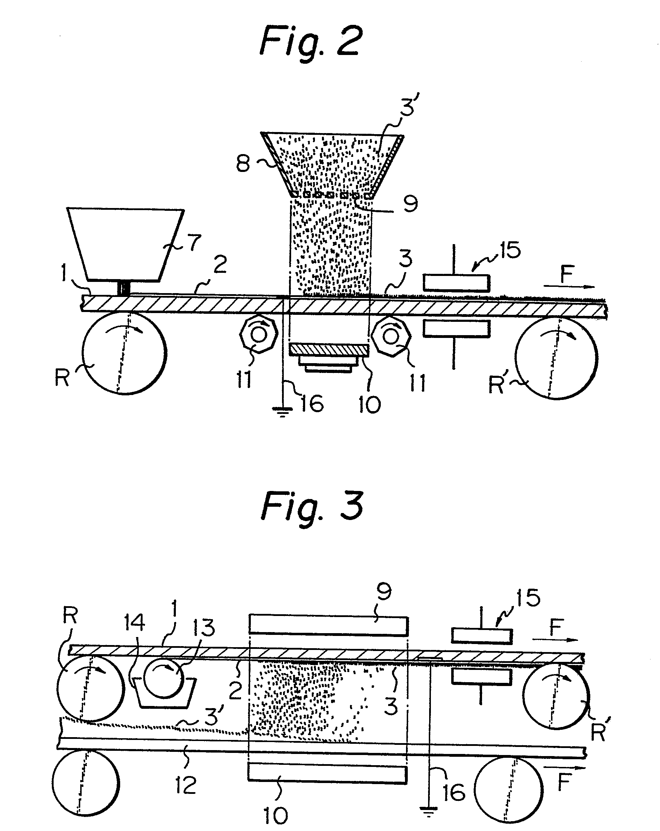

Now referring to Figure 2, an example of a process for preparing carbon-fiber-covered materials of the invention will be described. Principally, the process as described and illustrated herein is based upon an electrostatic flocking technique, although other method such as, for example, mechanical spraying, can also be utilized.

In Figure 2, a continuous web-like substrate 1, such as polyvinyl chloride sheet, is continuously supplied by a pair of feed rolls R and R' in the direction of arrow F. Adhesive applicator means 7 is provided at upstream side of the running substrate 1. Adhesive layer 2 is applied by means 7 to the surface of substrate 1 in a predetermined thickness. Adhesive layer 2 may preferably contain electrical conductive dusts in order to make the layer 2 conductive for the purpose to be described hereinafter.

Above the substrate 1 is supported a hopper 8 which accommodates fine and minute carbon fibers 3' in loose conditions. The hopper 8 is provided on its base with an electrode 9 having slits or small gaps formed therein. Another electrode 10 is disposed below the path of substrate 1 in oppositely facing relationship with the electrode 9. Across electrodes 9 and 10 is applied electrostatic voltage of about 10 to 100KV, preferably 20-60KV so as to eject loose carbon fibers 3' from hopper 8 onto substrate 1. Ejected carbon fibers are sticking to and standing on the adhesive layer 2 in dense and upright conditions. In order to assist carbon fibers in standing upright on the substrate 1, rotating rods 11 may be provided adjacent to the undersurface of the substrate 1 to beat the same and vibrate carbon fibers into standing conditions.

High frequency induction heater or ultrasonic heater means 15 may be provided downstream of the hopper 8. If adhesive layer 2 is of conductive nature, an earthing wire 16 is connected between adhesive layer 2 and the ground.

-17-

In operation, fine and minute carbon fibers of, e.g., 8 microns in diameter and 1.2mm in length, are charged in the hopper 8 and the substrate 1 is continuously moved in the direction of arrow F through applicator means 7. As the electrostatic voltage is applied across the electrodes 9 and 10, carbon fibers 3' are forced to fly out of the hopper 8 through the slits or gaps of the electrode 9 toward the other electrode 10. Electrode 9 may be connected to positive side of the power source (not shown) and electrode 10 may be connected to negative side, or vice versa. Flying carbon fibers are caused to stick at high speed in the adhesive layer 2 by the action of the electrostatic field formed between electrodes 9 and 10, of which main area is depicted in imagination line in Figure 2. Thus, substantially all of carbon fibers 3 are permitted to stand upright and densely on the substrate 1 as shown in Figure 2 and more clearly in Figure 1(A). Rotating of rods 11 makes the substrate 1 vibrate to assist carbon fibers 3 in standing on the adhesive layer 2. By the use of high frequency heating apparatus 15 (or ultrasonic wave heater), adhesion between carbon fibers 3 and adhesive layer 2 and between adhesive layer 2 and substrate 1 can be strengthened.

In the course of electrostatic flocking process, carbon fibers placed in the hopper 8 become charged with electricity of the same polarity as that of electrode on which carbon fibers are first placed, i.e. positive electrode 9 in case of Figure 2, and produce strong repulsive forces against that electrode and, at the same time, are being strongly attracted by the electrode of opposite polarity, i.e. negative electrode 10. Thus, carbon fibers 3' are caused to fly away at high velocity and pierce into adhesive layer 2 with strong forces in such a manner that almost all fibers can stand upright on the substrate 1 with few floating fibers left on the substrate 1. Floating fibers, if any, can be remove by appropriate means such as suction box (not shown) to be disposed downstream of means 15. Carbon fibers 3 now standing on the adhesive layer 2 may exert repulsive forces upon following flying fibers of the same electric charge as that of the standing fibers 3 and obstruct the following fibers to reach and pierce into the adhesive layer 2. To avoid this, the adhesive layer 2 is preferably made conductive, as mentioned above, by incorporating conductive dusts therein and connected through the wire 16 to the ground. Thus, carbon fibers 3 upon reaching and piercing into the adhesive layer 2 will immediately lose their electric charge so that following fibers can penetrate into a mass of preceding fibers already standing on the adhesive layer even in very close proximity to individual preceding fibers.

While in Figure 2 the substrate 1 is shown as of a continuous web, substrates of limited length, such as sheet metal, plywood, leather, brick, may also be treated by the method of the invention. In such a case, an endless conveyor belt means may be disposed in place of the substrate 1 in Figure 2, and support thereon any substrates of limited length to convey the same through work stations 7, 8 and 15.

-19-

Figure 3 illustrates another example of a method for manufacturing the new material of the invention.

Continuous substrate 1 is placed on the feed rolls R and R' as running in the direction of arrow F below which is disposed a conveyor belt 12 running in the same direction F with the same speed as the substrate 1. Loose carbon fibers 3' finely divided or pulverized in the size of, for example, 1.2mm are supplied onto the conveyor 12 from suitable source (not shown) and fed into the electrostatic field as depicted by imagination line between positive and negative electrodes 9 and 10. Electrostatic voltage is being applied across the electrodes 9 and 10. An adhesive container 14 is placed below the substrate 1 and above the conveyor 12 in which an applicator roll 13 is partially immersed and contacted with the undersurface of the substrate 1 to apply an adhesive layer 2 thereto in a predetermined thickness.

Entering the electrostatic field between the electrodes 9 and 10, carbon fibers 3' on the conveyor 12 are forced to fly up at high speed with strong forces and stick upright into the adhesive layer 2 thereby to be densely planted on the substrate 1. In this method, there are substantially no fibers laid flat on the substrate 1 as fibers not adhering thereto, if any, will come down onto the conveyor 12 and be again caused to fly up against the substrate until they stick successfully into the adhesive layer 2, thus producing carbon-fiber-covered materials of higher density than obtained by the method of Figure 2.

According to the invention, by utilizing the apparatus and method as illustrated in Figure 2 or Figure 3, fine and minute carbon fibers in the size of, for example, 8 microns in diameter and 1.5mm in length, can be easily and successfully planted on the substrate in the density of about 15,000 through 50,000 fibers/cm$^2$, thus producing new materials which is virtually completely covered by fine carbon fibers standing upright thereon with substantially no exposed surface left.

The apparatus shown in Figure 2 and the apparatus shown in Figure 3 can be combined, that is, they can be disposed in tandem along the running direction of the same and single substrate 1 so that both surfaces of the substrate 1 may be covered with fine and minute carbon fibers standing upright and densely thereon to produce carbon-fiber-covered new materials as illustrated in Figure 1(B).

If desired, carbon-fiber-covered new materials thus obtained may be subjected to a high frequency press work which applies partial pressures onto the surface of the substrate to make an article having an appearance like an embossed carpet which has standing fibers in some areas and laid down fibers in another areas.

-21-

The new materials of the invention finds a wide variety of new uses which are not expected heretofore in regard to carbon fiber itself as well as conventional base material (substrate). Figure 4 through Figure 20 illustrate some examples of such uses.

Figure 4 illustrates a use of the new material of the invention as building or interior materials in houses, especially made mainly of wood for heat insulating purposes. In Figure 4, a left side roof 20, which may be of tin plate or slate, is covered on its innersurface directly with fine and minute carbon fibers 3 standing densely thereon. These carbon fibers, having heat resisting and insulating properties, form an insulating layer to prevent heat, for example, intense heat of the sunlight in summer, from entering the inside of the house. A right side roof in Figure 4 is not covered directly by carbon fibers, but is provided inside with a lining board 20' which may be plywood or polyvinyl chloride sheet having fine carbon fibers 3 planted thereon standing densely. These carbon-fiber-covered material 20 and 20' can also function to prevent heat in the house from escaping outside, especially in winter. For the same purposes, a ceiling 21 is covered on its upper surface with densely standing fine carbon fibers 3, which function to insulate the room both for cooling and heating purposes thereby to contribute to energy savings. A left side wall plate 22 which is, for example, of wooden material, is covered on its outside surface with fine carbon fibers 3 planted densely thereon so that it will effectively function to thermally insulate the room without considerably increasing the wall thickness and changing an appearance of the wall. In contrast, a right side wall plate 23 is provided on its inside surface with densely planted fine carbon fibers 3 which present a real black surface facing to the inside of the room. A black wall surface may be somewhat singular, but can be utilized for some interior decoration purposes. Also, wall plate 23 provided on its inside surface with carbon fibers 3 standing thereon can be utilized in, for example, a kitchen, a smoking room or a lavatory where carbon fibers are of activated type having sufficient adsorption ability to adsorb and remove malodor in the room.

A flooring 24 is provided on its undersurface with fine carbon fibers 3, preferably of activated type, which is useful for thermal insulation and for adsorption of malodor from musty air under the floor. Flooring 24 can also be installed with its covered surface 3 up, as for example, in the kitchen or lavatory for adsorption of malodor in the air.

Carbon fibers 3, especially of activated type utilized for adsorption purpose, can be easily renewed by washing in water, spraying stream or wiping with wet duster because they have good desorption ability to release malodorous substances contained therein to the water.

Generally speaking, the new materials of the invention as used for building or interior materials contribute to attain

-23-

energy savings by virtue of their thermal insulating properties and serve to provide fire or flame retardancy especially for wooden houses without requiring substantial change in architectural techniques and specifications heretofore relied upon so that the new materials of the invention can be employed in a relatively economical manner and will find spreading new uses.

Figure 5 shows a front elevational view partly cut away of a refrigerator in which new materials of the invention are used for thermal insulation and malodor adsorption. Lining plates 26 covered by fine carbon fibers 3 standing densely on inner surfaces are employed to form three inside walls and a bottom as well as an inner surface of a door (not shown). Lining plates may be of plastics, sheet metals, plate glass or ceramics. Carbon-fiber-covered plates 26 have good thermal insulation property preventing cold air in the refrigerator from escaping outwardly through outer shells thereby to reduce electrical power consumption and to increase cooling capacity of the refrigerator. As a result, the refrigerator employing carbon-fiber-covered lining plate 26 of the invention can be designed in a compact scale since a wall thickness t can be smaller than heretofore by virtue of good thermal insulation ability owned by carbon fibers 3. Where carbon fibers 3 are of activated type, malodor inherent in the refrigerator will not be produced because possible malodorous substances emitting from foods in the refrigerator will be quickly and effectively adsorbed by activated carbon fibers 3. In this regard, a shelf 26' covered with activated carbon fibers on its top surface or a shelf 26" covered with activated carbon fibers on its bottom surface may also be employed for adsorption purpose. When adsorption becomes poor, activated carbon fibers can be washed in hot water or wiped with wet duster to renew their adsorption ability.

Figure 6 is a partially sectional side view of an electric heater employing new materials of the invention as heat insulators. This electric heater has a reflecting plate 27 disposed behind heat radiating sources depicted by circles and provided on its rearface with densely standing fine carbon fibers 3. Reflecting plate 27 may be made of sheet metal such as stainless steel or heat resisting glass. Where reflecting plate 27 is of metallic material, it may be subjected to flocking operation (planting fine carbon fibers 3) in its straight or plane condition and thereafter to cutting and bending operation.

However good reflecting performance the plate 27 may have, heat radiated from the sources dissipates rearwardly through the plate 27 so that heating efficiency is diminished in the front. According to the invention, the reflecting plate 27 is covered with carbon fibers 3 on its rearface and carbon fibers 3 serve to shield heat dissipating rearwardly thereby to correspondingly increase heat radiated and reflected forwardly.

An outer shell 28 of the electric heater in Figure 6 is likewise provided with fine carbon fibers 3 standing densely on its outer surface. Usually, the outer shell 28 may be of metallic material and heated to such high temperatures that it may cause a burn upon inadvertently touching or even a fire. By utilizing the new material of the invention as an outer shell of the heater of this type, it is possible to prevent such an accident as fine standing carbon fibers planted densely on the outer or even inner surface of the shell function as the insulating layer.

Figure 7 is a schematic sectional view of a hot house of vinyl sheet for use in agricultural, horticultural or floricultural applications. A vinyl sheet 29 facing to the south (S) is made of transparent vinyl sheet to permit sunlight 31 to pass therethrough. A north (N) side sheet 30 is provided on its inner surface with densely standing carbon fibers 3 planted thereon according to the invention. Carbon fibers 3 may be provided even on the outer surface of the sheet 30. Carbon fibers 3 planted on the sheet 30 function as heat insulating layer to prevent heat of warm air 32 to escape outwarly through the sheet 30. Thus, high heating efficiency can be attained in the hot house and energy saving can also be attained where fuel or electric power is utilized to heat the inside of the house.

Carbon-fiber-covered sheets may also be employed on the south side of the hot house as shown at 29' in Figure 7. This

sheet 29' is covered with fine carbon fibers 3 densely planted on either inner or outer surface thereof and can be rolled up on the top of the house when daylight is available. When temperature differences between the inside and the outside of the hot house are large, for example, in rainy or cloudy weather or at night, the sheet 29' may be pull down over the transparent sheet 29 for heat insulation purpose.

Based on the same concept, a hot house may be made of usual transparent vinyl sheet on both sides (north and south), and combined removably with an insulating sheet like the sheet 29 or 29' which covers the overall hot house only when needed.

Likewise, insulating carbon-fiber-covered sheet may be employed in connection with the conventional green house (not shown) made of glass by putting the sheet, for example, on the north side roof or wall. Such insulating carbon-fiber-covered sheets may be of plate glasses having fine standing carbon fibers planted densely thereon or of substrate vinyl sheets or glass fiber fabrics covered by fine carbon fibers standing thereon, the latter being employed like an curtain or shades.

Figure 8 shows schematically a longitudinal sectional view of a shoe made with leather on which fine carbon fibers are planted densely. Fine carbon fibers 3, preferably of activated type, are planted and standing densely on the entire inside surfaces of the leathers 33, though for clarity sake they are depicted only in limited areas in Figure 8. Fine carbon fibers 3 densely planted on the surface of leather serve to adsorb malodor in the shoes as well as to keep man's foot warm, particularly in the winter season or in a cold district. Shoes having fine carbon fibers planted therein may also be suitable for workmen in, for example, iron foundries or firemen to avoid to get burnt in the foot. Aside from shoes, leather covered with fine standing carbon fibers planted on its surface may be suitably used to make a coldproof or a fireproof garments. Furthermore, activated carbon fibers can be planted densely by the method of the invention on various substrates such, for example, as leather, fabric, paper, vinyl or other plastic sheet to make insoles having strong adsorbing ability.

Figure 9 shows a schematic sectional view of an electronic oven or microwave range in which an inner partition 34 made of metallic material is provided on its outer surface with standing fine carbon fibers 3 for preventing heat dissipation from within a cooking compartment toward outside. Heat usually generated within a cooking compartment is so large that an outer shell 35 is heated to such high temperatures that it may cause a burn or scald and voluminous heat losses. Inner partition 34 covered with fine carbon fibers 3 according to the invention can effectively shield heat radiation and conduction from within the cooking compartment thereby to reduce power consumption and shorten a period of time required for cooking or heating foods. Further, inner partition 34 having high insulating performance permits to cconstruct an electronic oven of more compact size than usual since the outer shell 35 can be positioned adjacent to the inner partition 34 with smaller or thinner distance left therebetween. Otherwise, with the outer shell 35 unchanged in its overall outer dimensions, the cooking compartment can be adapted to have a larger capacity.

Figure 10 illustrates a section of a lid for cooking pan or pot made with carbon-fiber-covered new material of the invention. Fine carbon fibers 3 are planted densely on the surface of a metal plate which, in turn, is cut into a desired circular shape and undergoes press working to form a lid 36 as shown in Figure 10. Carbon fibers 3 may be planted on both surfaces of the lid 36.

When fries or "tempura" are being made in a pan shown in imagination line containing a large amount of oil, the oil may reach very high temperatures so that it easily catches fire and gives rise to a dangerous situation. In such a case, the lid 36 of the invention can be placed and pressed down by hand on the pan to shield fire and seal off the pan without fear of getting burnt in the hand and arm. In this manner, the carbon-fiber-covered lid of the invention serves as a fireproofing or extinguishing utensil.

Figure 11 is a sectional view of a bed pad made according to the invention. In this instance, foamed polyurethane 38 is used as a substrate on which fine carbon fibers 3 are densely planted by the method of the invention. Carbon fibers 3 cover the top surface, both side surfaces and both end surfaces of foamed polyurethane 38 in the illustrated example, though bottom surface may also be covered with carbon fibers if desired. A bed sheet or cover cloth 39 as shown in imagination line may be employed to envelop carbon-fiber-covered pad 38. Or, otherwise, fine standing carbon fibers may be provided on inner surface of sheet or cloth 39.

A bed or a sofa using as a padding foamed polyurethane with no flame proof finish is very likely to cause a fire if, for example, a person lying or sitting thereon drops inadvertently a lighted cigarette. A fire dropped on the pad is not readily extinguished, but rather lasting to ignite an inner portion of foamed polyurethane, and after a while volumes of smoke and/or flames suddenly arise.

By covering foamed polyurethane with fine standing carbon fibers according to the invention, such an accident can be completely prevented not only in that foamed polyurethane is protected from being ignited, but also in that carbon fibers act as fire retardant and even extinguish the fire at last. Thus, foamed polyurethane with no usual flame proof finish can be safely utilized as a padding for a bed or sofa.

Figure 12 is a partial sectional view of a blanket incorporating a new material of the invention. This blanket comprises an upper fabric 40 provided on its inner surface with fine standing carbon fibers 3 densely planted thereon, a lower fabric 41 which will be in touch with the body of a wearer, and a heating wire 42 interposed between fabrics 40 and 41. Carbon fibers 3 may also be planted on the outer surface of upper fabric 40. Upon turning on electric current, heating wire 42 generates heat to warm the human body through lower fabric 41. Without carbon fiber layer, at least a portion of the heat generated by the wire 42 would be dissipated in vain through upper fabric 40. According to the invention, however, densely planted fine standing carbon fibers 3 function just as to fill up the weaves of upper fabric 40 in such a way that air can not easily pass therethrough and act as heat insulator by themselves, so that almost all of the heat generated by heating wire 42 is supplied downwardly through lower fabric 41 to efficiently warm the human body.

Figure 13 is a partial sectional view of an electrically heating carpet which incorporates a new material of the invention as heat insulator. The carpet comprises a lower layer 43 which may be of cloths, plastics or rubber on which standing fine carbon fibers 3 are densely planted, an upper layer 44 which may be of pile fabric, and a heating wire 45. The carpet will be laid with its lower layer 43 in direct contact with a flooring which usually is of relatively low temperatures. Without an insulating layer of carbon fibers 3, a large amount of heat generated by the wire 45 would be conductively lost. The carpet protected by insulating carbon fibers 3 of the invention can improve heating efficiency and contribute to energy saving.

Figure 14 is a sectional view of a cooking utensil covered with insulating carbon fibers of the invention. Illustrated in Figure 14 is a shallow receptacle 46 of glass, pottery or porcelain which is to be heated with foods contained therein in an electronic oven or a gas oven of the type having an overhead heating system and to be served as it is on a table. Upon heated, the receptacle as a whole becomes very hot and, if placed directly on the table, it may cause to char or otherwise damage the table surface. According to the invention, the receptacle 46 is provided on its bottom surface with fine standing carbon fibers 3 for preventing high heat from being transmitted directly from the bottom thereof to the table surface. Likewise, an edge portion 47 can be provided with protective standing carbon fibers 3 densely planted thereon which protect man's fingers from getting burnt.

Figure 15 shows, partly in section and partly in elevation, refractories or fire bricks insulated with standing fine carbon fibers of the invention. A furnace, kiln, boiler or the like 48 is surrounded by refractories 49 for shielding emission of high heat from the furnace or the like 48. Nevertheless, an accident can not be prevented to happen if refractories 49 are at high temperatures of about 70°C or more when a person touches carelessly the refractories. To prevent this, according to the invention, the refractories 49 are covered on its outer surface with standing fine carbon fibers 3 thickly planted thereon. Although carbon fibers 3 are shown only in part in Figure 15 for clarity sake, they should be planted on the entire outer surface of the refractories 49. Thus, industrial safety facilities can be installed in a relatively simple and economical manner according to the invention.

Referring now to Figure 16, a practical form of the carbon-fiber-covered material of the invention will be described. Figure 16 shows a perspective view of a shielding or wave absorbing tape designed for easy use in shielding undesirable electromagnetic waves which may have influences upon electronic or electric equipments. The illustrated shielding tape comprises a continuous base film 1 of, for example, polyethylene or polypropylene, on which fine standing carbon fibers of about 1 - 3mm length are planted in crossing rows 3 and 4. As mentioned above in connection with Figure 1(D), thin and narrow layers of adhesive (2) are first applied onto a surface of base film 1 by utilizing, for example, applicator roll means having on its peripheral surface protruding crossing patterns corresponding to crossing rows 3 and 4. Then, base film 1 is passed through the electrostatic flocking station formed between two opposing electrodes such as shown in Figure 2 and 3 whereupon a shielding tape having on its surface standing fine carbon fibers rows 3 and 4 is obtained. A distance between adjacent two rows 3 or two rows 4 is to be determined dependent upon the wave length of undesirable electromagnetic waves. It is noted that the maximum distance permitted between rows to effectively shield undesirable waves should be of the magnitude equal to one hundredth of a target wave length. For instance, where wave length of target undesirable waves to be shielded off is 300mm, the maximum distance allowed between rows 3 or 4 is set to 3mm or less. The width of each row 3 or 4 is set to 2 or 3mm in practical view point of applying adhesive layers.

Upon completion of forming carbon fiber rows 3 and 4, the base film 1 is applied on its another surface with an adhesive layer such as shown at 5 in Figure 1(D). Adhesive layer 5 is covered with a remover paper 6, which can easily be peeled off at the time of applying the same onto any electrical or electronical equipment sought to be protected from undesirable electromagnetic waves. The shielding tape thus obtained of the invention is preferably rolled up as shown in Figure 16 for easy handling.

Figure 17 shows a fragmentary sectional view of a new material of the invention which may be used as a filter element and adsorbent in a water purifier or an air cleaner. Reference numeral 51 designates a permeable substrate material such as foamed polyurethane or sponge having open cells therein. The substrate 51 may be of about 1cm thick for general purposes though it may be larger or smaller in thickness dependent upon

-34-

specific purposes. The substrate 51 has a plurality of open cells 52 which penetrate the substrate from its one surface to another. On one surface of substrate 51 are applied adhesive layer 53 in such a way that individual adhesive layers 53 do not obturate individual openings of cells 52. To this end, it is preferable to apply adhesives in the form of thin solution having low viscosity as by spraying. Also, it is preferable to blow instantaneously a strong current of air into cells 52 from the opposite surface of the substrate to clear cell openings of adhesives which otherwise would obturate the same.

On each adhesive layer 53 are densely planted standing fine activated carbon fibers 54 of about 1mm long. It is possible to plant carbon fibers of about .1 - 3mm long on the substrate according to the invention. If desired, substrate 51 may be covered with carbon fibers on both surfaces.

Figure 18 schematically illustrates in an enlarged scale a portion of the new material of the invention shown in Figure 17. Carbon fibers 54 are standing close together on each adhesive layer 53 applied on the top of substrate 51 and surrounding openings of cells 52. In Figure 18, carbon fibers in the far side of openings are omitted for clarity sake. There are minute gaps left between individual fibers 54 through which molecules of air, water or other fluid to be filtered or cleaned can pass. These gaps, i.e., density in which carbon fibers are planted, can be properly adjusted by varying voltages applied across electrostatic electrodes and/or relative speed of moving substrate with the electrostatic field. Where mechanical spraying is utilized for planting carbon fibers on the substrate, relatively larger gaps are left between fibers 54 as compared to electrostatic flocking procedure.

An arrow A in Figures 17 and 18 indicates the current of air or other fluid flowing through the filter element of the invention. Flows $a_1$ flowing out along walls of open cell 52 are contacting with carbon fibers 54 standing around and adjacent to openings and being deprived of malodorous or harmful substances contained therein by micropores formed in the surface of activated carbon fibers. If air or other fluid is fed under some pressure, it will be spreading out as flows $a_2$ which penetrate into standing activated carbon fibers and receive more intimate and intense adsorbing activities thereof.

The filter element or adsorbent of the invention as illustrated and described above has very high adsorption capacity as well as desorption ability. Desorption is easily and quickly conducted by, for instance, spraying water, chemical solution, hot water or steam onto activated carbon fibers 54 standing of the substrate, thus renewing adsorption capacity of activated carbon fibers. The filter or adsorbent of the invention can be used for cleaning or purifying not only air, but also water and other liquid, for example, for removing malodor from brewing stock liquid.

-36-

The present invention contemplates to utilize as a permeable substrate wire cloths, wire gauzes or wire nettings. Figure 19 shows an example of such wire net 61 covered on its both surfaces 61a and 61b with fine standing activated carbon fibers 63 and 64. In preparing such covered wire net, a substrate net is first immersed in adhesive or solution thereof and then subjected to the electrostatic flocking procedure as explained above. Carbon fibers are adhered to overall peripheral surfaces of individual wires and project radially outwardly around each wire. Distance M between tips of carbon fibers standing on adjacent two wires can be as small as to virtually shut off the meshes of the net. However, there are microscopically sufficient gaps left between adjacent fibers to allow water or air molecules to pass therebetween.

The carbon-fiber-covered net of the invention can be used to make a handy filter device as shown in Figure 20. Filter device 70 is of basket shape made of wire net 71 having fine activated carbon fibers 73 standing and planted thereon. Alternatively, a bamboo net or basket can be utilized as a substrate on which activated carbon fibers are planted. A handle 75 is suitably provided.

The filter device 70 can be employed in order to obtain facilely water fit to drink on a journey to, for example, a backward region. Water taken from a river or a well is poured into a cup having the filter device 70 placed therein. Shaking the cup or the device 70 causes the water contained therein to pass back and forth through the carbon-fiber-covered net so that harmful and malodorous substances in the water can be effectively adsorbed and removed by myriad micropores of the activated carbon fiber.

Adsorption by the activated carbon fiber is found to take place in much far intensely and quickly as compared to powdery activated carbon. Further, desorption can also be easily conducted on the activated carbon fiber by subjecting the same to hot water or steam.

As fully and particularly described above, the present invention provides a novel combination of the carbon fiber with the conventional base material in a relatively simple and economical manner thereby to produce a new material useful in a wide variety of new uses which heretofore have not been expected at all and which are definitely promising in future in that the carbon fiber need not be subjected to any expensive and cumbersome treatment heretofore required to make so-called composite materials, in that the base material are easily and economically available from various sources, and in that thus produced new material has many desirable properties and functions such as heat resistivity, heat insulation, heat retardancy, corrosion resistivity, adsorption and wave shielding abilities and is of very high value but of relatively low cost.

-38-

The new material of the invention is advantageously utilized for energy saving in household, industrial and agricultural uses by virtue of its heat insulation property, for security cf life and property by virtue of its fire retardancy and fireproofing properties leading to prevention and reduction of the cause of a fire, and the protection of environment by virtue of its adsorption property of air and water contaminants and by virtue of its absorption property of undesirable electromagnetic waves.

While the invention has been described with respect to specific and preferred embodiments, changes and modifications can be made without departing from the scope of the present invention which is solely defined by appended claims.

-39-

CLAIMS

1. A new material comprising a combination of a substrate material selected from the group consisting of plastics, metals, glass, ceramics, wood, paper, cloths, leather, stone and brick, with fine and minute carbon fibers adhered to and standing densely on at least a portion of a surface of said substrate material, said carbon fibers including those of activated type and non-activated type.

2. The new material as claimed in Claim 1 wherein said carbon fibers are of from a few microns to a few millimeters in length.

3. The new material as claimed in Claim 2 wherein said carbon fibers are prepared by pulverizing or finely dividing continuous carbon fiber filament into a size of from .8 to 2.5mm in length.

4. The new material as claimed in Claim 3 wherein said carbon fibers are electrostatically adhered to and standing densely on said substrate.

5. The new material as claimed in Claim 1 wherein said substrate has an adhesive layer applied thereonto and said carbon fibers are sticking their base ends into said adhesive layer and standing thereof.

6.   The new material as claimed in Claim 5 wherein organic adhesives are employed as said adhesive layer.

7.   The new material as claimed in Claim 5 wherein inorganic adhesives are employed as said adhesive layer.

8.   The new material as claimed in Claim 1 wherein said substrate material is selected from the group consisting of wood plates, plastic sheets or plates and slates, and said carbon fibers are adhered to and densely standing on the entire surface of said substrate to form heat insulating material for use in houses.

9.   The new material as claimed in Claim 1 wherein said substrate material is selected from the group consisting of sheet metals and plastic plates, and said carbon fibers of activated type are densely adhered to said substrate to form thermal insulating and malodor adsorbing material for use in refrigerators.

10.   The new material as claimed in Claim 1 wherein said substrate material is selected from the group consisting of metal plates and glass plates, and said standing carbon fibers are densely adhered to the surface of said substrate to form heat insulating material for use in heating apparatus.

11.    The new material as claimed in Claim 1 wherein said substrate material is sheet vinyl, and said standing carbon fibers are densely adhered to the surface of said sheet vinyl to form an envelope for agricultural and horticultural uses.

12.    The new material as claimed in Claim 1 wherein said substrate material is leather, and said carbon fibers of activated type are densely adhered to the surface of said leather to form malodor adsorbing means for use in shoes.

13.    The new material as claimed in Claim 1 wherein said substrate material is metal plate, and said standing carbon fibers are densely adhered to the surface of said metal plate to form a fire-extinguishing lid for use with a pan or pot.

14.    The new material as claimed in Claim 1 wherein said substrate material is foamed polyurethane, and said carbon fibers are densely adhered to the surface of said foamed polyurethane to form fire retardant padding for use in a bed or a sofa.

15.    The new material as claimed in Claim 1 wherein said substrate material is permeable foamed polyurethane having open cells, and said carbon fibers of activated type is densely adhered to the surface of said polyurethane so as

0162645

-42-

not to clog said open cells to form adsorbent material for use in an air cleaner or a water purifier.

16. The new material as claimed in Claim 1 wherein said substrate material is metal or bamboo net, and said carbon fibers of activated type are densely adhered to the entire surface of said net to form adsorbent material for use in purifying water.

17. The new material as claimed in Claim 1 wherein said substrate material is polyethylene or polypropylene film, and said carbon fibers adhered are densely standing in crossing rows on said film, the spacing between each row being set to efficiently shield undesirable electromagnetic waves.

18. A method for manufacturing a carbon-fiber-covered material comprising the steps of:

(a) moving continuously a substrate material selected from the group consisting of plastics, metals, glass, ceramics, wood, paper, cloths, leather, stone and brick,

(b) providing electrostatic field across said moving substrate,

(c) providing a source of fine and minute carbon fibers facing one surface of said substrate in and adjacent to said electrostatic field, said carbon fibers being of from a few microns to a few millimeters in length,

-43-

(d)  applying adhesives onto said one surface of the substrate, and

(e)  ejecting said carbon fibers, by the action of said electrostatic field upon energized, from said source onto said one surface of the substrate thereby to plant said carbon fibers in standing conditions on said adhesives and to cover said substrate with standing fine and minute carbon fibers.

Fig. I(A)

Fig. I(B)

Fig. I(C)

Fig.I(D)

## Fig. 2

## Fig. 3

## Fig. 4

## Fig. 5

## Fig. 6

## Fig. 7

N ← → S

*Fig. 8*

*Fig. 9*

*Fig. 10*

*Fig. 11*

### Fig. 12

### Fig. 13

### Fig. 14

### Fig. 15

## Fig.16

## Fig. 17

*Fig.18*

*Fig.19*

*Fig.20*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 4, no. 73 (C-12)[555], 28th May 1980, page 92 C 12 & JP - A - 55 39 207 (TOHO BESLON K.K.) 19-03-1980 --- | 1,2,4, 5,6,18 | C 04 B 41/50<br>B 05 D 1/14<br>B 32 B 5/24<br>A 01 G 13/02<br>A 43 B 1/00<br>A 47 C 27/00<br>B 01 D 53/02<br>C 02 F 1/28 |
| A | IDEM --- | 3,15, 16 | E 04 B 1/76<br>E 04 C 2/26<br>F 25 D 23/00<br>H 05 B 3/10<br>H 05 K 9/00 |
| E | EP-A-0 136 605 (KURARAY CO., LTD.) --- | | |
| E | EP-A-0 137 299 (AMERICAN CYANAMID CO.) ----- | | |

TECHNICAL FIELDS
SEARCHED (Int. Cl.4)

B 05 D
C 04 B

The present search report has been drawn up for all claims

| Place of search | Date of completion of the search | Examiner |
|---|---|---|
| THE HAGUE | 22-08-1985 | VAN THIELEN J.B. |